# EUROPEAN PATENT APPLICATION

(11) **EP 4 559 878 A1**
(43) Date of publication of application: **28.05.2025**
(21) Application number: 23842626.6
(22) Date of filing: 28.03.2023
(51) Int. Cl.: C03B 33/07, C03C 27/06, E06B 3/663, E06B 3/677

(54) **GLASS PANEL UNIT MANUFACTURING METHOD AND GLASS PANEL UNIT ASSEMBLY**

(30) Priority: 22.07.2022 JP 2022117555
(71) Applicant: Panasonic Intellectual Property Management Co., Ltd., Osaka-shi, Osaka 540-6207 (JP)
(72) Inventor: NONAKA, Masataka, Kadoma-shi, Osaka 571-0057 (JP); ABE, Hiroyuki, Kadoma-shi, Osaka 571-0057 (JP); ISHIBASHI, Tasuku, Kadoma-shi, Osaka 571-0057 (JP); URIU, Eiichi, Kadoma-shi, Osaka 571-0057 (JP); ISHIKAWA, Haruhiko, Kadoma-shi, Osaka 571-0057 (JP); HASEGAWA, Kazuya, Kadoma-shi, Osaka 571-0057 (JP); SHIMIZU, Takeshi, Kadoma-shi, Osaka 571-0057 (JP); OTAKE, Shohei, Kadoma-shi, Osaka 571-0057 (JP); KOSUGI, Naoki, Kadoma-shi, Osaka 571-0057 (JP)
(74) Representative: Müller-Boré & Partner Patentanwälte PartG mbB
(86) International application number: PCT/JP2023/012663
(87) International publication number: WO 2024/018690

(57) **Abstract**

Disclosed herein is a method for manufacturing a glass panel unit contributing effectively to improvement in productivity and quality. An arrangement step S1 includes arranging a first glass substrate 1 and a second glass substrate 2 to make the first and second glass substrates 1, 2 face each other with a seal member 3 interposed along multiple lines between themselves. A bonding step S2 includes bonding the first and second glass substrates 1, 2 via the seal member 3. A cutting step S4 includes cutting off the first and second glass substrates 1, 2 along an identical line as viewed in a direction in which the first and second glass substrates 1, 2 face each other and along the seal member 3. The cutting step S4 also includes forming multiple sets of the first and second glass substrates 1, 2 divided by cutting off the first and second glass substrates 1, 2 along multiple lines where the seal member 3 remains along respective sides of cross sections of the first and second glass substrates 1, 2. The cutting step S4 further includes: cutting off one member selected from the first glass substrate 1 and the second glass substrate 2 from a surface of the first or second glass substrate 1, 2 along at least some of the multiple lines where the first and second glass substrates 1, 2 are to be cut off; and then cutting off the other member selected from the first glass substrate 1 and the second glass substrate 2 from a surface of the first or second glass substrate 1, 2.

## Description

### Technical Field

The present disclosure generally relates to a method for manufacturing a glass panel unit and also relates to a glass panel unit assembly. More particularly, the present disclosure relates to a method for manufacturing a glass panel unit in which a first glass substrate and a second glass substrate are arranged to face each other with a seal member interposed between themselves, and a glass panel unit assembly for use in such a manufacturing method.

### Background Art

Patent Literature 1 discloses a method for manufacturing a glass panel unit. This manufacturing method includes bonding, via a seal member, a first glass substrate and a second glass substrate which are arranged to face each other with the seal member interposed between themselves. Next, the first glass substrate, the seal member, and the second glass substrate are cut off at a time along a cutting plane, passing through the seal member, from one side selected from the first and second glass substrates bonded together, thereby manufacturing a glass panel unit.

According to the manufacturing method of Patent Literature 1, there is still room for improvement in productivity and quality, particularly when the first glass substrate and the second glass substrate are cut off.

### Citation List

### Patent Literature

Patent Literature 1: WO 2016/143328 A1

### Summary of Invention

An object of the present disclosure is to provide a method for manufacturing a glass panel unit contributing effectively to improvement in productivity and quality and also provide a glass panel unit assembly for use in such a manufacturing method.

A method for manufacturing a glass panel unit according to an aspect of the present disclosure includes an arrangement step, a bonding step, and a cutting step. The arrangement step includes arranging a first glass substrate and a second glass substrate to make the first glass substrate and the second glass substrate face each other with a seal member interposed along multiple lines between the first glass substrate and the second glass substrate. The bonding step includes bonding the first glass substrate and the second glass substrate via the seal member. The cutting step includes cutting off the first glass substrate and the second glass substrate along an identical line as viewed in a direction in which the first glass substrate and the second glass substrate bonded together face each other and along the seal member. The cutting step is the step of forming multiple sets of the first and second glass substrates divided by cutting off the first and second glass substrates along multiple lines where the seal member remains along respective sides of cross sections of the first and second glass substrates. The cutting step includes: cutting off one member selected from the group consisting of the first glass substrate and the second glass substrate from a surface of the first or glass substrate along at least some of the multiple lines where the first glass substrate and the second glass substrate are to be cut off; and then cutting off another member selected from the group consisting of the first glass substrate and the second glass substrate from a surface of the first or second glass substrate.

A glass panel unit assembly according to another aspect of the present disclosure includes a first glass substrate and a second glass substrate, a frame member, and a plurality of partition members. The first glass substrate and the second glass substrate face each other. The frame member is formed in a frame shape between the first glass substrate and the second glass substrate. The plurality of partition members are arranged to partition an internal space, surrounded with the first glass substrate, the second glass substrate, and the frame member, into a plurality of spaces. Only one member selected from the group consisting of the first glass substrate and the second glass substrate has been cut off along each of multiple lines aligned with the plurality of partition members.

### Brief Description of Drawings

FIG. 1 is a flowchart showing the procedure of a method for manufacturing a glass panel unit according to a first embodiment;
FIG. 2 is a perspective view illustrating an arrangement step of the method for manufacturing a glass panel unit according to the first embodiment;
FIG. 3 is a plan view illustrating the arrangement step and a bonding step of the method for manufacturing a glass panel unit according to the first embodiment;
FIG. 4 is a plan view illustrating a processing step and a cutting step of the method for manufacturing a glass panel unit according to the first embodiment;
FIG. 5 is a cross-sectional view illustrating the cutting step of the method for manufacturing a glass panel unit according to the first embodiment;
FIG. 6 is a cross-sectional view illustrating the cutting step of the method for manufacturing a glass panel unit according to the first embodiment;
FIG. 7 is a cross-sectional view illustrating an assembly formed by the method for manufacturing a glass panel unit according to the first embodiment;
FIG. 8 is a cross-sectional view illustrating the cutting step of the method for manufacturing a glass panel unit according to the first embodiment;
FIG. 9 is a cross-sectional view illustrating the cutting step of the method for manufacturing a glass panel unit according to the first embodiment;
FIG. 10A is a cross-sectional view illustrating a cutting step of a known method for manufacturing a glass panel unit;
FIG. 10B is a cross-sectional view illustrating the cutting step of the method for manufacturing a glass panel unit according to the first embodiment;
FIG. 11 is a cross-sectional view illustrating a cutting step of a method for manufacturing a glass panel unit according to a second embodiment;
FIG. 12 is a cross-sectional view illustrating the cutting step of the method for manufacturing a glass panel unit according to the second embodiment; and
FIGS. 13A-13C are plan views illustrating a cutting step of the known art.

### Description of Embodiments

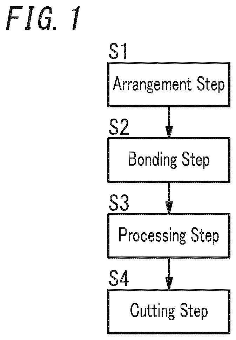

Exemplary embodiments and their variations will now be described with reference to FIGS. 1-13. Note that the embodiments and their variations to be described below are only exemplary ones of various embodiments of the present disclosure and their variations and should not be construed as limiting. Rather, the exemplary embodiments and their variations may be readily modified in various manners depending on a design choice or any other factor without departing from the scope of the present disclosure. Optionally, the variations to be described below may be adopted in combination as appropriate.

The drawings to be referred to in the following description of embodiments are all schematic representations. Thus, the ratio of the dimensions of respective constituent elements illustrated on the drawings does not always reflect their actual dimensional ratio.

### (First embodiment)

### (1) Overview

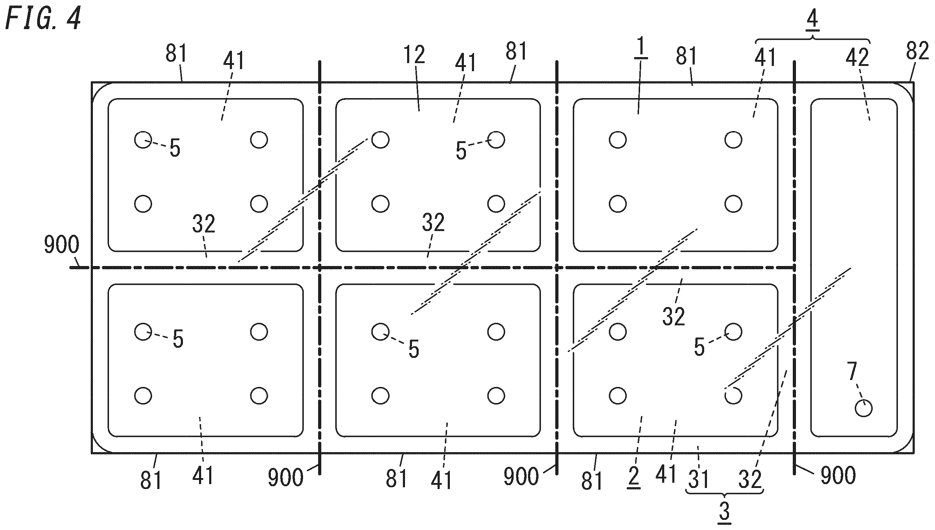

A method for manufacturing a glass panel unit 100 according to an exemplary embodiment includes an arrangement step S1, a bonding step S2, and a cutting step S4 (refer to FIG. 1). The arrangement step S1 includes arranging a first glass substrate 1 and a second glass substrate 2 to make the first glass substrate 1 and the second glass substrate 2 face each other with a seal member 3 interposed between the first glass substrate 1 and the second glass substrate 2 (refer to FIGS. 1-3). The bonding step S2 includes bonding the first glass substrate 1 and the second glass substrate 2 via the seal member 3 provided along multiple lines. The cutting step S4 includes cutting off the first glass substrate 1 and the second glass substrate 2 along an identical line when viewed in a facing direction X in which the first glass substrate 1 and the second glass substrate 2 bonded together face each other and along multiple lines where the seal member 3 may remain along respective sides of cross sections of the first and second glass substrates 1, 2 divided (refer to FIGS. 4-10). The cutting step S4 includes: cutting off one member selected from the group consisting of the first glass substrate 1 and the second glass substrate 2 from a surface thereof along at least some of the multiple lines where the first glass substrate 1 and the second glass substrate 2 are to be cut off; and then cutting off the other member selected from the group consisting of the first glass substrate 1 and the second glass substrate 2 from a surface thereof.

According to this embodiment, even after one member selected from the group consisting of the first glass substrate 1 and the second glass substrate 2 has been cut off from a surface thereof, the other member, namely, either the first glass substrate 1 or the second glass substrate 2, has not been cut off yet. Thus, until the other member that is either the first glass substrate 1 or the second glass substrate 2 is cut off, the first and second glass substrates 1, 2 are still bonded together via the seal member 3, and therefore, may be handled as an integral product. This may reduce the number of times the first and second glass substrates 1, 2 bonded together need to be positioned. In addition, this may also reduce the number of works in progress, which are intermediate products obtained by cutting off both of the first and second glass substrates 1, 2, thus reducing the in-process inventory. Consequently, this contributes to improving the productivity. In addition, this also allows the first and second glass substrates 1, 2 to be cut off more accurately along an intended cutting plane, thus contributing to improving the quality as well.

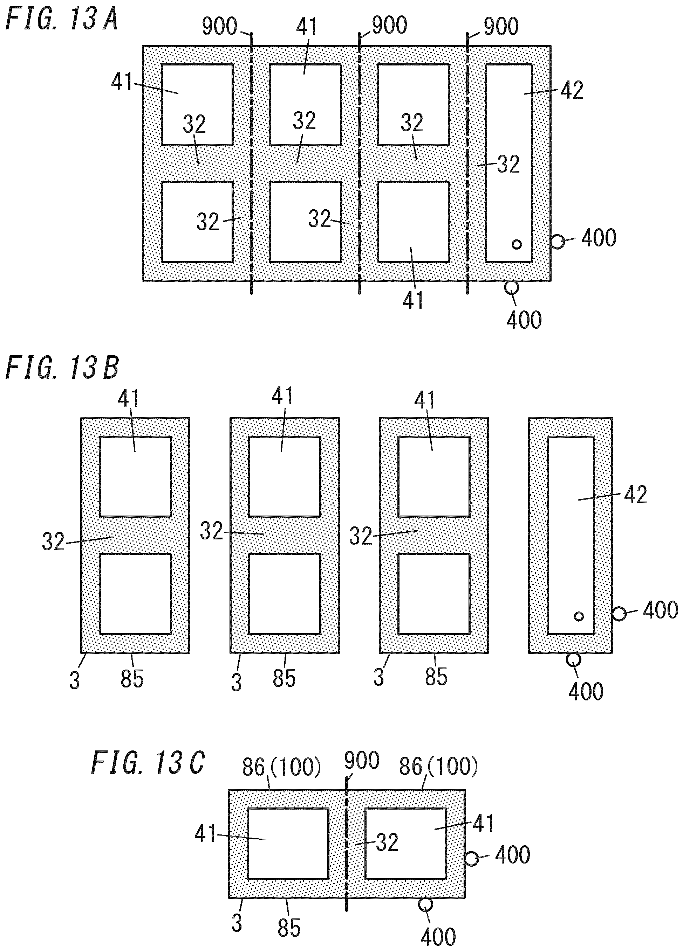

FIGS. 13A-13C illustrate a cutting step of the known art. This cutting step is the step of cutting off, after having formed an assembly 8 by bonding together the first glass substrate 1 and the second glass substrate 2 via the seal member 3 in a bonding step, the first and second glass substrates 1, 2 and the seal member 3 of the assembly 8 along multiple lines. The seal member 3 includes a plurality of partition members 32. The space inside the seal member 3 is partitioned by the plurality of partition members 32 into a plurality of first spaces 41 and a second space 42. The assembly 8 is cut off along multiple lines aligned with the partition members 32.

The cutting step of the known art includes, first, cutting off the assembly along cutting planes 900 aligned with the respective partition members 32, which are parallel to the latitudinal axis of the assembly having a rectangular shape in plan view as shown in FIG. 13A, thereby forming a plurality of intermediate cut products 85. In this process step, the assembly 8 is cut off after having been positioned with respective ends of two adjacent sides of the assembly 8 abutted on positioning members 400. Next, after the assembly 8 has been divided into a plurality of intermediate cut products 85 as shown in FIG. 13B, each of the plurality of intermediate cut products 85 is further cut off along a line aligned with the partition member 32, thereby forming a plurality of final cut products 86 as shown in FIG. 13C. In this process step, the intermediate cut product 85 is cut off after having been positioned with respective ends of two adjacent sides of the intermediate cut product 85 abutted on the positioning members 400. As a result, the final cut products 86 may be obtained as the glass panel units 100.

According to such a cutting step of the known art, the cutting machine could not recognize the cutting line if the intermediate cut product 85 were left as it is, thus requiring manually positioning the intermediate cut product 85 all over again. This increases the number of times the positioning needs to be performed, thus possibly causing a decline in productivity. In addition, this also requires, while one intermediate cut product 85 is being positioned, the other intermediate cut products 85 to be kept in stock to cause an increase in in-process inventory. Furthermore, the assembly 8 and the intermediate cut product 85 need to be fixed at different positions on the positioning members 400, thus causing a decline in positioning accuracy at the time of the cutting step in some cases. In that case, the positioning tolerance of the intermediate cut product 85 is sometimes added to the positioning tolerance of the assembly 8.

In contrast, according to this embodiment, even after one member selected from the group consisting of the first glass substrate 1 and the second glass substrate 2 has been cut off from a surface thereof, the other member, namely, either the first glass substrate 1 or the second glass substrate 2, has not been cut off yet. Thus, until the other member that is either the first glass substrate 1 or the second glass substrate 2 is cut off, the first and second glass substrates 1, 2 are still bonded together via the seal member 3, and therefore, may be handled as an integral product. This may reduce the number of times the assembly 8 need to be positioned at the time of the cutting step. In addition, this may also reduce the number of works in progress. Consequently, this contributes to improving the productivity. In addition, this also allows the assembly 8 to be cut off more accurately along an intended cutting plane, thus contributing to improving the quality as well.

### (2) Details

A method for manufacturing a glass panel unit 100 according to this embodiment is a so-called "simultaneous multiple panel (or multi-panel) forming process" which allows a plurality of glass panel units 100 to be formed at a time.

A method for manufacturing a glass panel unit 100 according to this embodiment includes an arrangement step S1, a bonding step S2, and a cutting step S4. Optionally, the method for manufacturing the glass panel unit 100 may include not only the arrangement step S1, the bonding step S2, and the cutting step S4 but also a processing step S3 as well. As shown in FIG. 1, in the method for manufacturing the glass panel unit 100 according to this embodiment, the arrangement step S1 is followed by the bonding step S2, the bonding step S2 is followed by the processing step S3, and the processing step S3 is followed by the cutting step S4. Next, the respective process steps will be described in detail one by one.

### <Arrangement step>

The arrangement step S1 includes arranging the first glass substrate 1 and the second glass substrate 2 to make the first glass substrate 1 and the second glass substrate 2 face each other with the seal member 3 interposed along multiple lines between themselves.

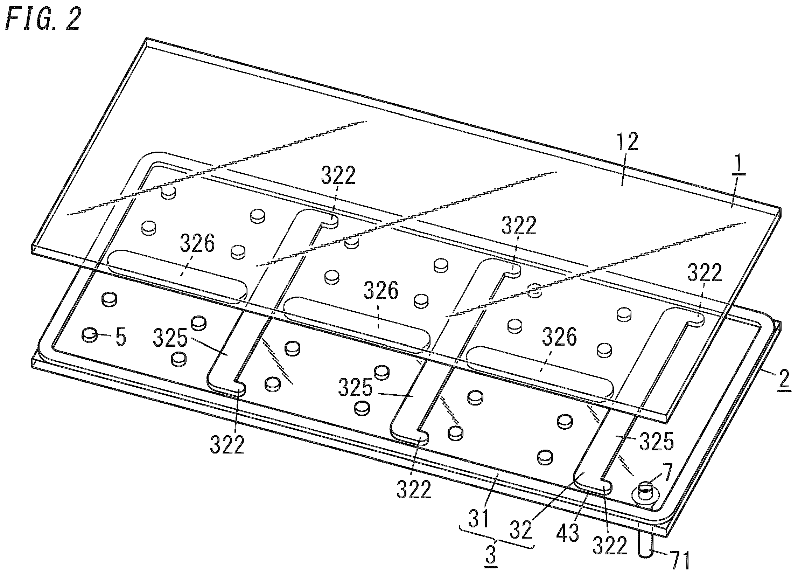

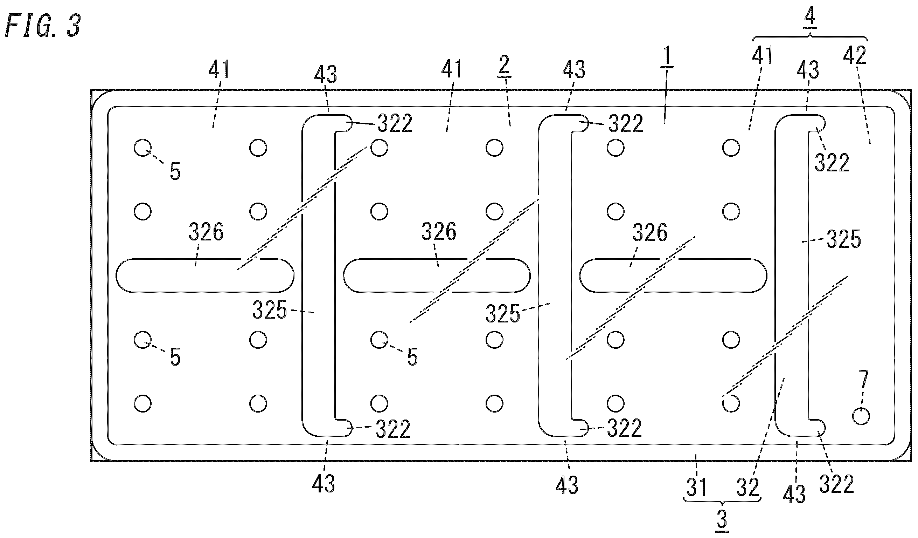

The arrangement step S1 includes arranging the first glass substrate 1, the second glass substrate 2, the seal member 3, and a plurality of spacers 5 shown in FIGS. 2 and 3 at respective predetermined positions.

The first glass substrate 1 is a rectangular flat glass pane. The first glass substrate 1 has a first surface 11 on one side in the thickness direction and a second surface 12 on the other side in the thickness direction. The first surface 11 and second surface 12 of the first glass substrate 1 are flat surfaces which are parallel to each other.

Examples of materials for the first glass substrate 1 include soda lime glass, high strain point glass, chemically tempered glass, alkali-free glass, quartz glass, Neoceram, and thermally tempered glass.

The first surface 11 of the first glass substrate 1 may be an outer surface of a coating. The coating may be, for example, an infrared reflective film but may also be a film with other physical properties. Optionally, no coating may be provided for the first glass substrate 1.

The second glass substrate 2, as well as the first glass substrate 1, is a rectangular flat glass pane. The second glass substrate 2 has a first surface 21 on one side in the thickness direction and a second surface 22 on the other side in the thickness direction. The first surface 21 and second surface 22 of the second glass substrate 2 are flat surfaces which are parallel to each other. An evacuation port 7 is provided at a corner of the second glass substrate 2.

Examples of materials for the second glass substrate 2 include soda lime glass, high strain point glass, chemically tempered glass, alkali-free glass, quartz glass, Neoceram, and thermally tempered glass.

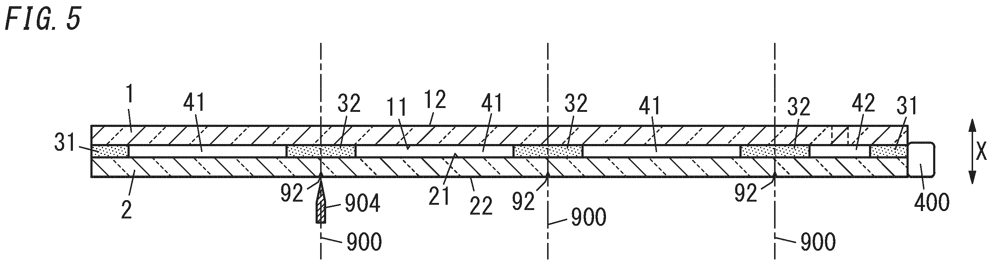

The first glass substrate 1 and the second glass substrate 2 are arranged to face each other. In this case, the first surface 11 of the first glass substrate 1 and the first surface 21 of the second glass substrate 2 face each other and are parallel to each other (refer to FIG. 5).

The seal member 3 is interposed between the first glass substrate 1 and the second glass substrate 2. The seal member 3 includes a frame member 31 formed in a frame shape. In addition, the seal member 3 further includes a plurality of partition members 32. The frame member 31 and the plurality of partition members 32 are arranged on the first surface 21 of the second glass substrate 2. On the first surface 21, the rectangular frame member 31 is disposed along the outer peripheral edges of the second glass substrate 2. The plurality of partition members 32 are arranged to be surrounded with the frame member 31.

The first glass substrate 1 and the second glass substrate 2 are hermetically bonded together via the seal member 3 (including the frame member 31 and the plurality of partition members 32) in the bonding step S2 (to be described later). As a result, an internal space 4 is created between the first glass substrate 1 and the second glass substrate 2. The internal space 4 is a space surrounded with the frame member 31, the first glass substrate 1, and the second glass substrate 2.

Both the frame member 31 and the plurality of partition members 32 of the seal member 3 are made of a glass frit (glass paste). The glass frit may be a low-melting glass frit such as a bismuth-based glass frit, a lead-based glass frit, and a vanadium-based glass frit. The seal member 3 is a glass frit having a softening point higher than 265°C and preferably has a softening point equal to or higher than 300°C and more preferably has a softening point equal to or higher than 350°C. When formed as the seal member 3, a glass frit with such a high softening point is likely to have similar properties (such as hardness) to the first glass substrate 1 and the second glass substrate 2. This makes it easier to cut off the seal member 3 in the cutting step S4 and reduces the chances of causing a cutting error. In this embodiment, a bismuth-based glass frit with a softening point of 430°C is preferably used.

As shown in FIGS. 2 and 3, the plurality of partition members 32 each include a wall portion 325 extending straight and a pair of blocking portions 322 extended from both longitudinal ends of the wall portion 325. The pair of blocking portions 322 extends perpendicularly to the longitudinal axis of the wall portion 325.

Air passages 43 are formed between each partition member 32 and the frame member 31. Specifically, the space left between one longitudinal end of the wall portion 325 and the frame member 31 and the space left between the other longitudinal end of the wall portion 325 and the frame member 31 each serve as the air passage 43. Note that the locations and number of the air passages 43 are only an example and should not be construed as limiting.

The plurality of partition members 32 further includes wall portions 326, each of which is elongate along the longitudinal axis of the first and second glass substrates 1, 2. A ventilating gap is provided between each end portion of the wall portion 326 and a corresponding side surface of the wall portion 325.

The plurality of spacers 5 are arranged on the first surface 21 of the second glass substrate 2. The plurality of spacers 5 are used to maintain a predetermined gap between the first glass substrate 1 and the second glass substrate 2. Each of the plurality of spacers 5 is formed out of a transparent material in a circular columnar shape. The material, dimensions, and shape of each spacer 5, the interval between adjacent spacers 5, and the arrangement pattern of the plurality of spacers 5 may be selected appropriately. Optionally, only one spacer 5 may be disposed or no spacers 5 may be provided at all. Furthermore, the spacers 5 do not have to be made of a transparent material.

### <Bonding step>

The bonding step S2 includes bonding the first glass substrate 1 and the second glass substrate 2 together via the seal member 3. That is to say, the bonding step S2 is the step of bonding the first and second glass substrates 1, 2, which have been arranged in the arrangement step S1, together via the seal member 3. In addition, the bonding step S2 further includes creating, between the first and second glass substrates 1, 2 bonded via the frame member 31, an internal space 4 surrounded with the frame member 31. Thus, the internal space 4 is partitioned by parts of the seal member 3 (i.e., the plurality of partition members 32) into a plurality of first spaces 41 and a second space 42 (refer to FIGS. 2 and 3). The plurality of first spaces 41 and the second space 42 communicate with each other through the air passages 43.

The bonding step S2 includes heating, in a sealing furnace, the first and second glass substrates 1, 2 which have been set in place to sandwich the seal member 3 and other members between themselves as shown in FIGS. 2 and 3. In the bonding step S2, the temperature inside the sealing furnace is determined at a predetermined temperature (hereinafter referred to as a "first melting temperature") equal to or higher than the softening point of the frame member 31. Melting the frame member 31 once inside the furnace at the first melting temperature causes the first and second glass substrates 1, 2 to be hermetically bonded together via the frame member 31.

Specifically, the first and second glass substrates 1, 2 loaded into the sealing furnace are heated at the first melting temperature for a predetermined amount of time. In this process step, the first melting temperature and the predetermined amount of time are determined to prevent the air passages 43 from being closed by the partition members 32. At a point in time when the bonding step S2 is finished, air is allowed to pass between the plurality of first spaces 41 and the second space 42 through the air passages 43 left between the frame member 31 and the plurality of partition members 32.

The plurality of first spaces 41 are spaces where the plurality of spacers 5 are located. The second space 42 is a space continuous with the evacuation port 7. The evacuation port 7 connects the second space 42 to the external space. That is to say, the evacuation port 7 allows the second space 42 to communicate with the external space. The evacuation port 7 according to this embodiment is used to evacuate the plurality of first spaces 41 through the second space 42 and the air passages 43.

### <Processing step>

The processing step S3 is the step of turning the internal space 4 into a vacuum space and includes an evacuation step and a hermetically sealing step. The evacuation step and the hermetically sealing step of the processing step S3 are performed in the sealing furnace continuously with the bonding step S2.

The evacuation step is the step of exhausting the air from inside the internal space 4 to the external space via the evacuation port 7, thereby creating a vacuum in the entire internal space 4. The evacuation step according to this embodiment includes exhausting the air from inside the first spaces 41 to the external space via the air passages 43, the second space 42, and the evacuation port 7, thereby reducing the pressure in the first spaces 41 until a vacuum space is created there. This evacuation is carried out using, for example, a vacuum pump via an exhaust pipe 71 (refer to FIG. 1) connected to the second glass substrate 2 to communicate with the evacuation port 7. The duration of the evacuation is determined to create a vacuum space with a desired degree of vacuum (e.g., a degree of vacuum equal to or less than 0.1 Pa, for example).

The hermetically sealing step includes melting the partition members 32 at a predetermined temperature (hereinafter referred to as a "second melting temperature") equal to or higher than the softening point of the partition members 32, thereby deforming the partition members 32 to close the air passages 43. As a result, the first spaces 41 that have been evacuated are surrounded entirely with the frame member 31 and the partition members 32 to be hermetically sealed to prevent the air from entering the first spaces 41 from the external space (refer to FIG. 4). Specifically, each of the partition members 32 is deformed to cause the blocking portion 322 at one end of the partition member 32 to close one air passage 43 and to cause the blocking portion 322 at the other end of the partition member 32 to close the other air passage 43 (refer to FIGS. 2 and 4). The partition members 32 thus deformed serve as boundary walls that hermetically partition the internal space 4 as the vacuum space into the first spaces 41 and the second space 42.

The second melting temperature at which the partition members 32 are melted is determined at a temperature higher than the first melting temperature. In other words, the partition members 32 are provided to be deformed at a temperature higher than the first melting temperature and thereby close the air passages 43. This temperature setting prevents the partition members 32 from being deformed to close the air passages 43 when the first and second glass substrates 1, 2 are bonded together in the bonding step S2.

A provisionally assembled unit having the plurality of first spaces 41 that have turned into vacuum spaces as shown in FIG. 4 is obtained by going through the processing step S3. The provisionally assembled unit is an intermediate product for use in the method for manufacturing a glass panel unit 100 according to this embodiment.

In this embodiment, the processing step S3 is the step of exhausting the air from the internal space 4 (consisting of the plurality of first spaces 41 and the second space 42) through the evacuation port 7 provided through the second glass substrate 2 and then hermetically sealing the plurality of first spaces 41 by deforming parts (i.e., the plurality of partition members 32) of the seal member 3 (refer to FIG. 4). Note that the manufacturing method according to this embodiment may further include a processing step S3 including either exhausting the air from the internal space 4 or supplying a gas into the internal space 4.

### <Cutting step>

The cutting step S4 includes cutting off the first and second glass substrates 1, 2 along virtual cutting planes 900 that pass through the first glass substrate 1, the second glass substrate 2, and the seal member 3. That is to say, the cutting step S4 includes cutting off the provisionally assembled unit, unloaded from the sealing furnace, along the virtual cutting planes 900 shown in FIGS. 4 and 5, thereby physically separating the provisionally assembled unit into a plurality of parts 81, each having a corresponding one of the first spaces 41, and another part 82 having the second space 42. The cutting planes 900 are provided to pass through the respective partition members 32 along the entire length thereof when viewed in plan. That is to say, the provisionally assembled unit is cut off along the entire longitudinal and latitudinal axes thereof. As used herein, the phrase "when viewed in plan" means viewing either the second surface 12 of the first glass substrate 1 or the second surface 22 of the second glass substrate 2 from in front of the second surface 12 or the second surface 22 in the facing direction X in which the first and second glass substrates 1, 2 bonded together face each other. The facing direction X is the same as a thickness direction defined for the first and second glass substrates 1, 2 and the seal member 3 that have been bonded together.

To cut off the provisionally assembled unit along the cutting planes 900, a cutter (cutting blade) 902 is used. The cutter 902 may be, for example, a cutting wheel provided for a scriber. Optionally, a mechanism for applying vibrations to the cutter 902 may be used. The direction in which the vibrations are applied is the thickness direction defined for the first glass substrate 1 and the second glass substrate 2, in other words, the direction in which the first glass substrate 1, the partition members 32, and the second glass substrate 2 are stacked one on top of another (i.e., the same as the facing direction X). Alternatively, the scriber may also be replaced with another type of device such as a device for cutting off the provisionally assembled unit with water jet emitted or a device for cutting off the provisionally assembled unit by irradiating the provisionally assembled unit with a laser beam, for example.

In this embodiment, the cutting step S4 includes cutting off the first glass substrate 1 and the second glass substrate 2 along an identical line as viewed in the facing direction X in which the first glass substrate 1 and the second glass substrate 2 bonded together face each other and along the seal member 3. That is to say, the cutting step S4 includes cutting off the first glass substrate 1 and the second glass substrate 2 along a plane in which the first and second glass substrates 1, 2 are aligned with each other (i.e., along the same plane) when viewed in plan. Such a plane in which the first and second glass substrates 1, 2 are aligned with each other when viewed in plan is aligned with each of the virtual cutting planes 900. Note that the cutting step S4 includes cutting off the seal member 3 as well. The seal member 3 is cut off such that part of the seal member 3 that has been cut off remains on respective sides 811, aligned with the cutting planes 900, of the first and second glass substrates 1, 2 that have been divided. Consequently, part of the seal member 3 (i.e., part of the partition members 32) that has been cut off remains along the respective sides 811 included in each of the plurality of parts 81, respectively having the first spaces 41, thus keeping the first spaces 41 hermetically sealed. In addition, another part of the seal member 3 that has been cut off remains along another side of the cutting plane 900 included in the part 82 having the second space 42.

As can be seen, the cutting step S4 is the step of forming multiple sets of the first and second glass substrates 1, 2 divided by cutting off the first and second glass substrates 1, 2 along multiple lines where the seal member 3 may remain along respective sides of cross sections of the first and second glass substrates 1, 2 divided. In this embodiment, seven sets of first and second glass substrates 1, 2 divided are formed. Six out of the seven sets of first and second glass substrates 1, 2 divided are sets of the first and second glass substrates 1, 2 divided to serve as the parts 81 each having the first space 41 as shown in FIG. 4. The other set out of the seven sets of first and second glass substrates 1, 2 divided is the first and second glass substrates 1, 2 divided to serve as the part 82 having the second space 42. As can be seen, the cutting step S4 is the step of cutting off the first and second glass substrates 1, 2 such that part of the seal member 3 may remain along respective sides of cross sections of the first and second glass substrates 1, 2 divided.

In this embodiment, the cutting step S4 includes a first cutting step and a second cutting step. That is to say, the step of cutting off the first glass substrate 1, the second glass substrate 2, and the seal member 3 may be performed in these two steps, namely, the first cutting step and the second cutting step. The first cutting step and the second cutting step may be performed in any arbitrary order. That is to say, the first cutting step and the second cutting step may be performed such that the first cutting step is followed by the second cutting step or that the second cutting step is followed by the first cutting step. Alternatively, the order in which the first cutting step and the second cutting step are performed may be set with respect to each cutting line.

The first cutting step includes cutting off the first glass substrate 1 from one surface of the first glass substrate 1. As used herein, the "surface of the first glass substrate 1" in the first cutting step refers to the second surface 12 of the first glass substrate 1. Thus, the first cutting step is the step of cutting off the first glass substrate 1 from the second surface 12 thereof toward the first surface 11 thereof.

The second cutting step includes cutting off the second glass substrate 2 from one surface of the second glass substrate 2. As used herein, the "surface of the second glass substrate 2" in the second cutting step refers to the second surface 22 of the second glass substrate 2. Thus, the second cutting step is the step of cutting off the second glass substrate 2 from the second surface 22 thereof toward the first surface 21 thereof.

The first cutting step includes a first incision forming step and a first pressing step. That is to say, the first glass substrate 1 is cut off from the surface thereof in these two steps, namely, the first incision forming step and the first pressing step.

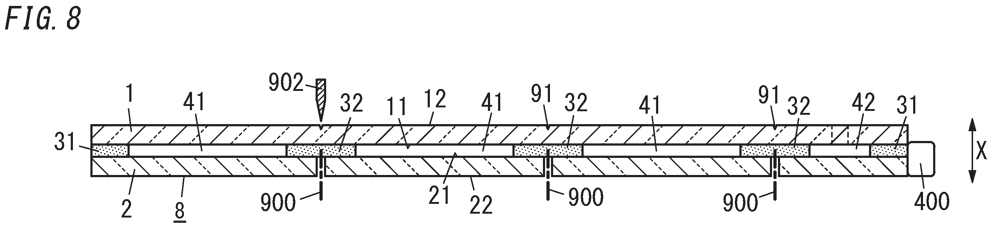

The first incision forming step includes forming a first incision 91 on the surface of the first glass substrate 1. As shown in FIG. 8, the first incision 91 is formed by pressing the cutting edge of the cutter 902 against the surface (i.e., the second surface 12) of the first glass substrate 1. The first incision 91 is formed to such a depth as to scratch the surface (i.e., the second surface 12) of the first glass substrate 1. Also, the first incision forming step is carried out along the entire length of the longitudinal axis of the plurality of partition members 32. Thus, the first incision 91 is formed linearly in plan view in the direction in which the seal member 3 extends (i.e., along the longitudinal axis of the seal member 3).

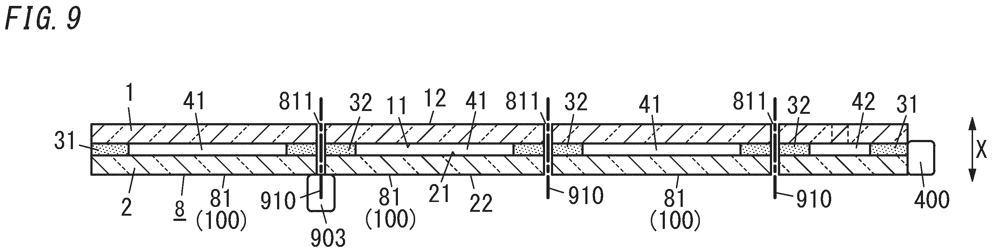

The first pressing step includes applying pressing force along the first incision 91 from the second glass substrate 2 toward the first glass substrate 1 to cut off the first glass substrate 1. Thus, the first pressing step is a step to be performed after the first incision forming step. The first pressing step may be performed by pressing a presser 903 such as a roller against the surface (i.e., the second surface 22) of the second glass substrate 2 (refer to FIG. 9). In this process step, the presser 903 is moved in the direction in which the first incision 91 extends (i.e., along the longitudinal axis of the first incision 91). As a result, parts, located on both sides of the first incision 91, of the first glass substrate 1 receive force in respective directions in which those parts are caused to separate from each other, thereby cutting off the first glass substrate 1 along the entire length of the latitudinal axis of the assembly 8. Also, the first pressing step is the step of cutting off the first glass substrate 1 with the first incision 91 from the second surface 12 toward the first surface 11 thereof.

The second cutting step includes a second incision forming step and a second pressing step. That is to say, the second glass substrate 2 is cut off from the surface thereof in these two steps, namely, the second incision forming step and the second pressing step.

The second incision forming step includes forming a second incision 92 on the surface of the second glass substrate 2. As shown in FIG. 5, the second incision 92 is formed by pressing the cutting edge of a cutter 904 against the surface (i.e., the second surface 22) of the second glass substrate 2. The second incision 92 is formed to such a depth as to scratch the surface (i.e., the second surface 22) of the second glass substrate 2. Also, the second incision forming step is carried out along the entire length of the longitudinal axis of the plurality of partition members 32. Thus, the second incision 92 is formed linearly in plan view in the direction in which the seal members 3 extends (i.e., along the longitudinal axis of any of the seal member 3).

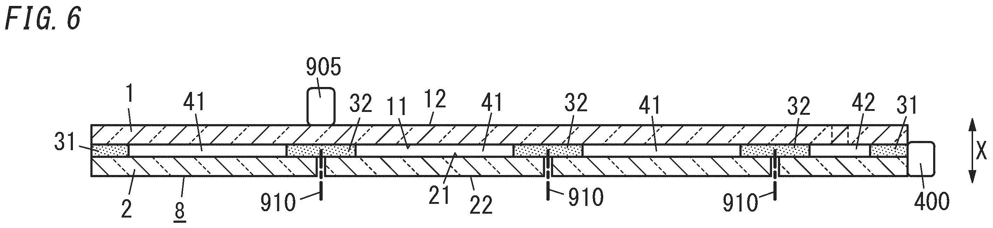

The second pressing step includes applying pressing force along the second incision 92 from the first glass substrate 1 toward the second glass substrate 2 to cut off the second glass substrate 2. Thus, the second pressing step is a step to be performed after the second incision forming step. The second pressing step may be performed by pressing a presser 905 such as a roller against the surface (i.e., the second surface 12) of the first glass substrate 1 (refer to FIG. 6). In this process step, the presser 905 is moved in the direction in which the second incision 902 extends (i.e., along the longitudinal axis of the second incision 92). As a result, parts, located on both sides of the second incision 92, of the second glass substrate 2 receive force in respective directions in which those parts are caused to separate from each other, thereby cutting off the second glass substrate 2 along the entire length of the latitudinal axis of the assembly 8. Also, the second pressing step is the step of cutting off the second glass substrate 2 with the second incision 92 from the second surface 22 toward the first surface 21 thereof.

The first incision 91 and the second incision 92 are formed to overlap with each other (i.e., aligned with each other) when viewed in plan (i.e., when viewed in the facing direction X). That is to say, the first incision 91 and the second incision 92 are formed on any of the virtual cutting planes 900. This allows the first and second glass substrates 1, 2 to be cut off along an identical line as viewed in the facing direction X in which the first and second glass substrates 1, 2 face each other.

After the first incision forming step and the second incision forming step have been performed in any arbitrary order, the first pressing step and the second pressing step are performed in any arbitrary order. That is to say, the first incision forming step may be followed by the second incision forming step. Alternatively, the second incision forming step may be followed by the first incision forming step. Still alternatively, the first incision forming step and the second incision forming step may be performed in parallel with each other.

The first pressing step may be performed at any timing before or after the second incision forming step as long as the first pressing step is performed after the first incision forming step. In addition, the first pressing step may be performed at any timing before or after the second pressing step as long as the first pressing step is performed after the first incision forming step. Thus, the first pressing step may be performed after the second incision forming step and before the second pressing step.

The second pressing step may be performed at any timing before or after the first incision forming step as long as the second pressing step is performed after the second incision forming step. In addition, the second pressing step may be performed at any timing before or after the first pressing step as long as the second pressing step is performed after the second incision forming step. Thus, the second pressing step may be performed after the first incision forming step and before the first pressing step.

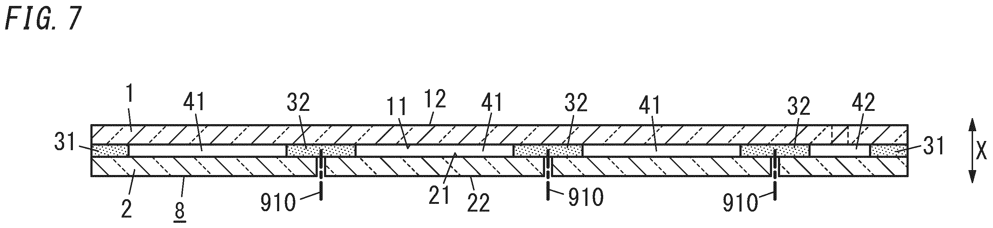

FIGS. 5-9 show a series of process steps included in the first cutting step and the second cutting step. First, as shown in FIG. 5, the second incision forming step is performed. Next, as shown in FIG. 6, the second pressing step is performed, thereby forming an assembly 8, of which only the second glass substrate 2 has been cut off along the cutting lines 910 with the first glass substrate 1 not cut off yet as shown in FIG. 7. Subsequently, as shown in FIG. 8, the first incision forming step is performed. Thereafter, as shown in FIG. 9, the first pressing step is performed.

The seal member 3 is cut off in either the first pressing step or the second pressing step or in both the first pressing step and the second pressing step. If the seal member 3 is cut off in the first pressing step, the first glass substrate 1 is cut off from the second surface 12 toward the first surface 11 thereof and then the seal member 3 is cut off from the first surface 11 of the first glass substrate 1 toward the first surface 21 of the second glass substrate 2. If the seal member 3 is cut off in the second pressing step, the second glass substrate 2 is cut off from the second surface 22 toward the first surface 21 thereof and then the seal member 3 is cut off from the first surface 21 of the second glass substrate 2 toward the first surface 11 of the first glass substrate 1. If the seal member 3 is cut off in both the first pressing step and the second pressing step, then the seal member 3 is cut off halfway through its thickness in one step selected from the group consisting of the first pressing step and the second pressing step. Thereafter, the rest of the seal member 3 is cut off along the thickness thereof in the other step selected from the group consisting of the first pressing step and the second pressing step.

The seal member 3 has a width falling within the range from 2 mm to 40 mm before being cut off. This reduces the chances of causing a decrease in the degree of hermetic seal of the glass panel unit 100 or a decrease in the mechanical strength thereof. Among other things, the partition members 32 of the seal member 3 are cut off across the latitudinal axis (i.e., the width) thereof, and therefore, each part of the partition members 32 divided preferably has a sufficiently broad width. For example, if the partition members 32 have a width equal to or greater than 2 mm before being cut off, then each part of the partition members 32 divided will have a width equal to or greater than 1 mm even when the partition members 32 to be divided are cut off approximately along a center line that passes through the middle of its width. Meanwhile, the seal member 3 preferably has a width equal to or less than 40 mm before being cut off, because this reduces the chances of the internal space 4 becoming too narrow. The seal member 3 preferably has a width equal to or greater than 5 mm and equal to or less than 35 mm, and more preferably has a width equal to or greater than 10 mm and equal to or less than 30 mm, before being cut off.

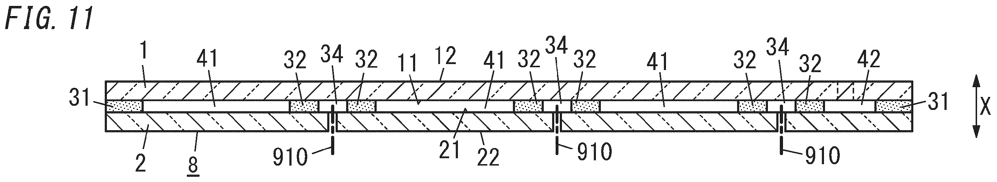

As shown in FIG. 11, the assembly 8 to be subjected to the cutting step S4 is cut off along a plane in which the first glass substrate 1, the seal member 3, and the second glass substrate 2 are laid one on top of another. The reference sign 910 denotes cutting lines along which the first glass substrate 1, the seal member 3, and the second glass substrate 2 are to be cut off. The cutting lines 910 are located on the cutting planes 900. Thus, the first glass substrate 1, the seal member 3, and the second glass substrate 2 are cut off along the cutting planes 900. In this embodiment, the first glass substrate 1 and the second glass substrate 2 are cut off from their surface in both the first cutting step and the second cutting step. This makes it easier, even if the first glass substrate 1 or the second glass substrate 2 is relatively thick, to cut off the first glass substrate 1 and the second glass substrate 2 along a plane aligned with the seal member 3. Thus, the cutting lines 910 are defined to be linear axes parallel to the facing direction X. As used herein, the "relatively thick" first glass substrate 1 or second glass substrate 2 refers to a glass substrate with a thickness equal to or greater than 2.7 mm. That is to say, according to this embodiment, even if at least one of the first glass substrate 1 or the second glass substrate 2 has a thickness equal to or greater than 2.7 mm, the cutting lines 910 may also be defined to be linear axes on the cutting planes 900, and therefore, the chances of causing a cutting error are slim. Naturally, this embodiment may also reduce the chances of causing a cutting error even if at least one of the first glass substrate 1 or the second glass substrate 2 has a relatively small thickness (e.g., less than 2.7 mm).

The seal member 3 is a member formed by melting a glass frit once. Thus, in the assembly 8, the first glass substrate 1 and the second glass substrate 2 have been solidly integrated together via the seal member 3. Then, the cutting step S4 causes a crack along the thickness of the first glass substrate 1 or the second glass substrate 2, thus enabling cutting off the first glass substrate 1, the partition members 32, and the second glass substrate 2 smoothly along the cutting planes 900 as if the first glass substrate 1, the partition members 32, and the second glass substrate 2 formed a single glass pane. That is to say, the assembly 8 may be cut off smoothly as if the assembly 8 were a single glass pane.

Multiple parts 81 divided from the assembly 8 are formed as the glass panel units (thermally insulated glass panel units) 100 (refer to FIG. 4). The other part 82 divided is an extra part. Along respective sides 811 of each of those parts 81 for use as the glass panel units 100, respective cross sections of the first glass substrate 1, the seal member 3 (i.e., the partition members 32), and the second glass substrate 2 are flush and continuous with each other. This ensures sufficient mechanical strength and handleability even before the respective cross sections along the respective sides 811 are subjected to further machining. Optionally, the respective cross sections along the respective sides 811 may be subjected to any type of further machining as needed.

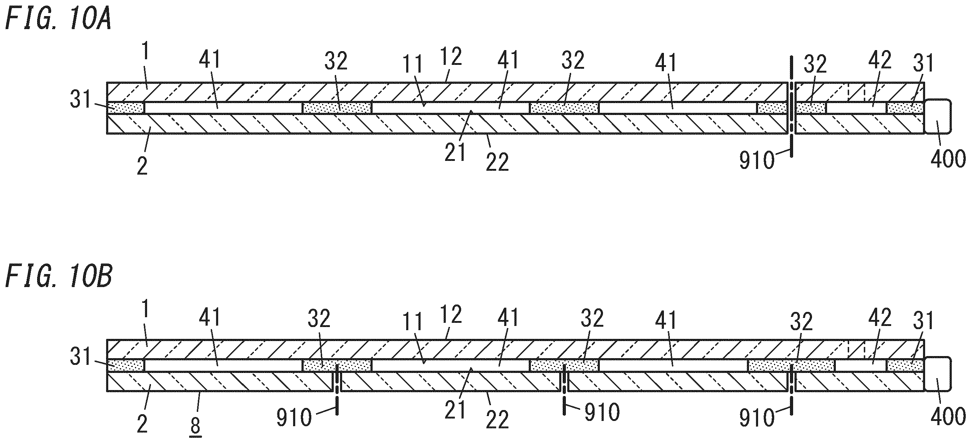

If the first glass substrate 1, the second glass substrate 2, and the seal member 3 (partition member 32) were cut off along only one of multiple cutting lines (aligned with one of the partition members 32) as in the known art shown in FIG. 10A, then a part which has not been positioned yet by the positioning members 400 should be abutted on, and positioned again by, the positioning members 400 before being further cut off.

In contrast, the cutting step according to this embodiment includes cutting, in at least some of the multiple cutting lines along which the first glass substrate 1 and the second glass substrate 2 are to be cut off, one member selected from the group consisting of the first glass substrate 1 and the second glass substrate 2 from the surface thereof first, and then cutting off the other member selected from the group consisting of the first glass substrate and the second glass substrate from the surface thereof. Thus, in the assembly 8 according to this embodiment, only one member selected from the group consisting of the first glass substrate 1 and the second glass substrate 2 is cut off. This allows the assembly 8 to be handled as an integral product by either the first glass substrate 1 or the second glass substrate 2 that has not been cut off yet. That is why if the second cutting step is followed by the first incision forming step as shown in FIG. 10B, for example, there is no need to position the assembly 8 again by abutting the assembly 8 on the positioning members 400 again. This allows the first incision forming step to be performed continuously with the second cutting step, thus eliminating works in progress, and thereby improving the productivity. In addition, there is no need to re-position the assembly 8 by abutting the assembly 8 on the positioning members 400, thus allowing the assembly 8 to be cut off highly accurately.

According to this embodiment, the cutting step S4 preferably includes cutting off, from the surface thereof, one member selected from the group consisting of the first glass substrate 1 and the second glass substrate 2 and then cutting off, from the surface thereof, the other member selected from the group consisting of the first glass substrate 1 and the second glass substrate 2 along all of the multiple lines where the first glass substrate 1 and second glass substrate 2 are to be cut off. This makes it easier to handle the assembly 8 as an integral product.

### (3) Variations

The first embodiment described above is only one of various embodiments of the present disclosure and should not be construed as limiting. Rather, the first exemplary embodiment may be readily modified in various manners depending on a design choice or any other factor without departing from the scope of the present disclosure.

In the first embodiment, the processing step S3 includes evacuating the internal space 4 until a vacuum is created there. Alternatively, the entire internal space 4 may be filled with a gas through the evacuation port 7 and the air passages 43 and then parts (i.e., the partition members 32) of the seal member 3 may be deformed by heating to hermetically seal the first spaces 41. In that case, the gas may be a gas with low thermal conductivity such as dried air or argon gas. An assembly 8 having the first spaces 41 filled with the gas may be obtained by going through such a processing step S3. Then, those parts 81 divided from the assembly 8 are used as glass panel units (thermally insulated glass panel units) in which the gap between the first glass substrate 1 and the second glass substrate 2 is filled with the gas.

### (Second embodiment)

A method for manufacturing a glass panel unit 100 according to a second embodiment is different from the first embodiment in the configurations of the seal member 3 and the assembly 8. In the following description, any constituent element of this second embodiment, having the same function as a counterpart of the first embodiment described above, will be designated by the same reference numeral as that counterpart's, and description thereof will be omitted as appropriate herein. Optionally, the configuration to be described below for the second embodiment may be adopted as appropriate in combination with the configuration already described for the first embodiment (including its variations).

In this embodiment, the seal member 3 includes a plurality of facing portions which face each other with a gap 34 left between themselves. In this embodiment, the plurality of facing portions are configured as a plurality of partition members 32. The plurality of partition members 32 face each other with the gap 34 left between themselves in a direction perpendicular to the facing direction X in which the first glass substrate 1 and the second glass substrate 2 bonded face each other. In this embodiment, two partition members 32 face each other with the gap 34 left between themselves. The plurality of partition members 32 partition the internal space 4 surrounded with the first glass substrate 1, the second glass substrate 2, and the frame member 31 into the first spaces 41 and the second space 42.

In this embodiment, the cutting step S4 includes cutting off the first glass substrate 1 and the second glass substrate 2 along respective planes aligned with the gaps 34 as viewed in the facing direction in which the first and second glass substrates 1, 2 bonded face each other.

In this embodiment, the cutting step S4 also includes cutting off the first glass substrate 1 and the second glass substrate 2 along planes in each of which the first and second glass substrates 1, 2 are aligned with each other (i.e., along the same plane) when viewed in plan. The planes in each of which the first and second glass substrates 1, 2 are aligned with each other in plan view are located on the virtual cutting planes 900 and aligned with the respective gaps 34. In this embodiment, the first and second glass substrates 1, 2 are cut off in two perpendicular directions, namely, along the longitudinal axis and latitudinal axis of the assembly 8. In addition, the cutting step S4 also includes separating each pair of partition members 32 (seal member 3) facing each other along the gap 34. Each pair of partition members 32 facing each other is separated such that part of each partition member 32 separated remains along one side 811, aligned with a corresponding one of the cutting planes 900, of the first and second glass substrates 1, 2 that have been cut off. Thus, respective parts of the partition members 32 separated remain at least along the respective sides 811 included in the parts 81 having the first spaces 41, respectively. This may keep the first spaces 41 hermetically sealed.

In this embodiment, as well as in the first embodiment described above, the cutting step S4 also includes a first cutting step and a second cutting step. Specifically, the first cutting step includes cutting off the first glass substrate 1 from one surface of the first glass substrate 1. The second cutting step includes cutting off the second glass substrate 2 from one surface of the second glass substrate 2.

The first cutting step includes a first incision forming step and a first pressing step. The first incision forming step includes forming a first incision 91 on the surface of the first glass substrate 1. The first incision 91 is formed by pressing the cutting edge of the cutter 902 against the surface (i.e., the second surface 12) of the first glass substrate 1. The first incision 91 is formed to such a depth as to scratch the surface (i.e., the second surface 12) of the first glass substrate 1. Also, the first incision forming step is carried out along the entire length of the latitudinal axis of the assembly 8. Thus, the first incision 91 is formed linearly in plan view in the direction in which the gap 34 extends (i.e., along the longitudinal axis of the gap 34).

The first pressing step includes applying pressing force along the first incision 91 from the second glass substrate 2 toward the first glass substrate 1 to cut off the first glass substrate 1. Thus, the first pressing step is a step to be performed after the first incision forming step. The first pressing step may be performed by pressing a presser 903 such as a roller against the surface (i.e., the second surface 22) of the second glass substrate 2. In this process step, the presser 903 is moved in the direction in which the first incision 91 extends (i.e., along the longitudinal axis of the first incision 91). As a result, the first glass substrate 1 is cut off along the entire length of the longitudinal axis of the partition member 32. Also, the first pressing step is the step of cutting off the first glass substrate 1 with the first incision 91 from the second surface 12 toward the first surface 11 thereof.

The second cutting step includes a second incision forming step and a second pressing step. The second incision forming step includes forming a second incision 92 on the surface of the second glass substrate 2. The second incision 92 is formed by pressing the cutting edge of the cutter 904 against the surface (i.e., the second surface 22) of the second glass substrate 2. The second incision 92 is formed to such a depth as to scratch the surface (i.e., the second surface 22) of the second glass substrate 2. Also, the second incision forming step is carried out along the entire length of the longitudinal axis of the partition member 32. Thus, the second incision 92 is formed linearly in plan view in the direction in which the gap 34 extends (i.e., along the longitudinal axis of the gap 34).

The second pressing step includes applying pressing force along the second incision 92 from the first glass substrate 1 toward the second glass substrate 2 to cut off the second glass substrate 2. Thus, the second pressing step is a step to be performed after the second incision forming step. The second pressing step may be performed by pressing a presser 905 such as a roller against the surface (i.e., the second surface 12) of the first glass substrate 1 as shown in FIG. 6. In this process step, the presser 905 is moved in the direction in which the second incision 902 extends (i.e., along the longitudinal axis of the second incision 92). As a result, the second glass substrate 2 is cut off along the entire length of the longitudinal axis of the partition member 32. Also, the second pressing step is the step of cutting off the second glass substrate 2 with the second incision 92 from the second surface 22 toward the first surface 21 thereof.

The first incision 91 and the second incision 92 are formed to overlap with each other (i.e., aligned with each other) when viewed in plan (i.e., when viewed in the facing direction X). That is to say, the first incision 91 and the second incision 92 are formed on one of the virtual cutting planes 900 to be aligned with a corresponding one of the gaps 34. This allows the first and second glass substrates 1, 2 to be cut off along an identical line as viewed in the facing direction X in which the first and second glass substrates 1, 2 face each other.

In this embodiment, the first cutting step and the second cutting step may be performed in any order as in the first embodiment described above. That is to say, the first cutting step and the second cutting step may be performed such that the first cutting step is followed by the second cutting step or that the second cutting step is followed by the first cutting step. Alternatively, the order in which the first cutting step and the second cutting step are performed may be set with respect to each cutting line.

Furthermore, as in the first embodiment, the first incision forming step, the first pressing step, the second incision forming step, and the second pressing step are performed in an appropriate order. That is to say, after the first incision forming step and the second incision forming step have been performed in any arbitrary order, the first pressing step and the second pressing step are performed in any arbitrary order. In this case, the first incision forming step may be followed by the second incision forming step. Alternatively, the second incision forming step may be followed by the first incision forming step. Still alternatively, the first incision forming step and the second incision forming step may be performed in parallel with each other.

In the assembly 8 shown in FIG. 11, only the second glass substrate 2 has been cut off along the cutting lines 910. In this assembly 8, only one member selected from the group consisting of the first glass substrate 1 and the second glass substrate 2 has been cut off. This allows the assembly 8 to be handled as an integral product by either the first glass substrate 1 or the second glass substrate 2 which has not been cut off yet.

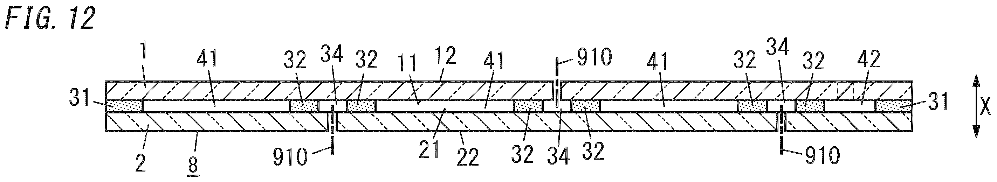

On the other hand, in the assembly 8 shown in FIG. 12, a part of the first glass substrate 1 and a part of the second glass substrate 2 have been cut off along the cutting lines 910 but the cutting plane of the first glass substrate 1 and the cutting plane of the second glass substrate 2 are not aligned with each other in plan view. That is to say, the respective cutting planes of the first glass substrate 1 and the second glass substrate 2 are aligned with different gaps 34 among the plurality of gaps 34. This allows the assembly 8 to be handled as an integral product by either the first glass substrate 1 or the second glass substrate 2 which has not been cut off yet.

According to this embodiment, the first glass substrate 1 and the second glass substrate 2 are cut off along planes, each of which is aligned with the gap 34 between a corresponding pair of partition members 32 facing each other. This reduces the chances of applying significant force to the respective partition members 32 in the cutting step S4. Consequently, the second embodiment reduce the chances of causing a cutting error than the first embodiment. In this embodiment, only a part of the seal member 3 is also cut off in a region where each partition member 32 is bonded to the frame member 31.

In this embodiment, each partition member 32 has a width falling within the range from 1 mm to 20 mm. As used herein, the width of the partition member 32 refers to a dimension as measured in a direction in which each pair of partition members 32 face each other. This reduces the chances of causing a decline in the degree of hermetic seal of the glass panel unit 100 or a decrease in the mechanical strength thereof. Setting the width of each partition member 32 at a value equal to or greater than 1 mm ensures that the partition member 32 of the glass panel unit 100 has a width equal to or greater than 1 mm. Also, the width of each partition member 32 is preferably equal to or less than 20 mm because this reduces the chances of making the internal space 4 too narrow. Each partition member 32 more preferably has a width equal to or greater than 2.5 mm and equal to or less than 15 mm, and even more preferably has a which equal to or greater than 3 mm and equal to or less than 10 mm.

The width of the gap 34 (i.e., a dimension measured between the pair of partition members 32 facing each other) is not limited to any particular value but is preferably equal to or greater than 0.1 mm and equal to or less than 20 mm. The width of the gap 34 preferably falls within this range to set the first incision 91 and the second incision 92 in place easily and smoothly.

In the second embodiment described above, the assembly 8 is formed to obtain six glass panel units 100. Alternatively, the assembly 8 may also be formed to obtain two or more glass panel units (i.e., to cut out multiple (two or more) glass panel units out of the single assembly 8).

### (Recapitulation)

As can be seen from the foregoing description, a method for manufacturing a glass panel unit (100) according to a first aspect includes an arrangement step (S1), a bonding step (S2), and a cutting step (S4). The arrangement step (S1) includes arranging a first glass substrate (1) and a second glass substrate (2) to make the first glass substrate (1) and the second glass substrate (2) face each other with a seal member (3) interposed along multiple lines between the first glass substrate (1) and the second glass substrate (2). The bonding step (S2) includes bonding the first glass substrate (1) and the second glass substrate (2) via the seal member (3). The cutting step (S4) includes cutting off the first glass substrate (1) and the second glass substrate (2) along an identical line as viewed in a direction in which the first glass substrate (1) and the second glass substrate (2) bonded together face each other and along the seal member (3). The cutting step (S4) is the step of forming multiple sets of the first and second glass substrates (1, 2) divided by cutting off the first and second glass substrates (1, 2) along multiple lines where the seal member (3) remains along respective sides of cross sections of the first and second glass substrates (1, 2). The cutting step (S4) includes: cutting off one member selected from the group consisting of the first glass substrate (1) and the second glass substrate (2) from a surface of the first or second glass substrate (1, 2) along at least some of the multiple lines where the first glass substrate (1) and the second glass substrate (2) are to be cut off; and then cutting off another member selected from the group consisting of the first glass substrate (1) and the second glass substrate (2) from a surface of the first or second glass substrate (1, 2).

This aspect may reduce not only the number of times the first and second glass substrates (1, 2) bonded need to be positioned but also the in-process inventory, thus contributing to improving the productivity. In addition, this aspect also allows the first and second glass substrates (1, 2) to be cut off more accurately along an intended cutting plane, thus contributing to improving the quality as well.

In a method for manufacturing a glass panel unit (100) according to a second aspect, which may be implemented in conjunction with the first aspect, the cutting step (S4) includes: cutting off one member selected from the group consisting of the first glass substrate (1) and the second glass substrate (2) from a surface of the first or second glass substrate (1, 2) along all of the multiple lines where the first glass substrate (1) and the second glass substrate (2) are to be cut off; and then cutting off another member selected from the group consisting of the first glass substrate (1) and the second glass substrate (2) from a surface of the first or second glass substrate (1, 2).

This aspect may reduce not only the number of times the first and second glass substrates (1, 2) bonded need to be positioned but also the in-process inventory, thus contributing to improving the productivity. In addition, this aspect also allows the first and second glass substrates (1, 2) to be cut off more accurately along an intended cutting plane, thus contributing to improving the quality as well.

In a method for manufacturing a glass panel unit (100) according to a third aspect, which may be implemented in conjunction with the second aspect, the cutting step (S4) includes a first cutting step and a second cutting step. The first cutting step includes a first incision forming step and a first pressing step. The first incision forming step includes forming a first incision (91) on a surface of the first glass substrate (1) using a cutting blade. The first pressing step includes applying pressing force along the first incision (91) from the second glass substrate (2) toward the first glass substrate (1) to cut off the first glass substrate (1). The second cutting step includes a second incision forming step and a second pressing step. The second incision forming step includes forming a second incision (92) on a surface of the second glass substrate (2) using a cutting blade. The second pressing step includes applying pressing force along the second incision (92) from the first glass substrate (1) toward the second glass substrate (2) to cut off the second glass substrate (2).

This aspect may reduce not only the number of times the first and second glass substrates (1, 2) bonded need to be positioned but also the in-process inventory, thus contributing to improving the productivity. In addition, this aspect also allows the first and second glass substrates (1, 2) to be cut off more accurately along an intended cutting plane, thus contributing to improving the quality as well.

In a method for manufacturing a glass panel unit (100) according to a fourth aspect, which may be implemented in conjunction with the second aspect, the cutting step (S4) includes a first incision forming step, a first pressing step, a second incision forming step, and a second pressing step. The first incision forming step includes forming a first incision (91) on a surface of the first glass substrate (1) using a cutting blade. The first pressing step includes applying pressing force along the first incision (91) from the second glass substrate (2) toward the first glass substrate (1) to cut off the first glass substrate (1). The second incision forming step includes forming a second incision (92) on a surface of the second glass substrate (2) using a cutting blade. The second pressing step includes applying pressing force along the second incision (92) from the first glass substrate (1) toward the second glass substrate (2) to cut off the second glass substrate (2). The first pressing step and the second pressing step are performed after the first incision forming step and the second incision forming step have been performed.

This aspect may reduce not only the number of times the first and second glass substrates (1, 2) bonded need to be positioned but also the in-process inventory, thus contributing to improving the productivity. In addition, this aspect also allows the first and second glass substrates (1, 2) to be cut off more accurately along an intended cutting plane, thus contributing to improving the quality as well.

In a method for manufacturing a glass panel unit (100) according to a fifth aspect, which may be implemented in conjunction with any one of the first to fourth aspects, the seal member (3) includes a plurality of facing portions facing each other with a gap (34) left between the plurality of facing portions. The cutting step (S4) includes: cutting off, along a line aligned with the gap (34), one member selected from the group consisting of the first glass substrate (1) and the second glass substrate (2) from a surface of the first or second glass substrate (1, 2) along at least some of the multiple lines where the first glass substrate (1) and the second glass substrate (2) are to be cut off; and then cutting off another member selected from the group consisting of the first glass substrate (1) and the second glass substrate (2) from a surface of the first or second glass substrate (1, 2) such that the seal member remains along respective sides of cross sections of the first and second glass substrates (1, 2) divided.

This aspect reduces the chances of applying force to the seal member (3) in the cutting step (S4) by dividing the seal member (3) along the gap (34), thus making it easier to cut off the first and second glass substrates (1, 2) along the gap (34).

In a method for manufacturing a glass panel unit (100) according to a sixth aspect, which may be implemented in conjunction with the fifth aspect, the cutting step (S4) includes cutting off either the first glass substrate (1) or the second glass substrate (2) from a surface of the first or second glass substrate (1, 2) along all of the multiple lines where the first glass substrate (1) and the second glass substrate (2) are to be cut off and then cutting off either the second glass substrate (2) or the first glass substrate (1) from a surface of the first or second glass substrate (1, 2).

This aspect may reduce not only the number of times the first and second glass substrates (1, 2) bonded need to be positioned but also the in-process inventory, thus contributing to improving the productivity. In addition, this aspect also allows the first and second glass substrates (1, 2) to be cut off more accurately along an intended cutting plane, thus contributing to improving the quality as well.

In a method for manufacturing a glass panel unit (100) according to a seventh aspect, which may be implemented in conjunction with any one of the first to sixth aspects, the seal member (3) includes a frame member (31) formed in a frame shape. The bonding step (S2) includes creating an internal space (4) surrounded with the frame member (31) between the first and second glass substrates (1, 2) bonded together via the frame member (31).

According to this aspect, interposing the internal space (4) between the first glass substrate (1) and the second glass substrate (2) further improves the thermal insulation properties of the glass panel unit (100). That is to say, this makes it easier to efficiently manufacture a glass panel unit (100) having desired dimensions and shape and excellent thermal insulation properties.

A method for manufacturing a glass panel unit (100) according to an eighth aspect, which may be implemented in conjunction with the seventh aspect, further includes a processing step (S3) including either exhausting air from the internal space (4) or supplying a gas into the internal space (4).

According to this aspect, interposing the internal space (4), which either has had a reduced pressure or is filled with a gas, between the first glass substrate (1) and the second glass substrate (2) further improves the thermal insulation properties of the glass panel unit (100). That is to say, this makes it easier to efficiently manufacture a glass panel unit (100) having desired dimensions and shape and excellent thermal insulation properties.

A glass panel unit (100) assembly (8) according to a ninth aspect includes a first glass substrate (1) and a second glass substrate (2) facing each other, a frame member (31), and a plurality of partition members (32). The frame member (31) is formed in a frame shape between the first glass substrate (1) and the second glass substrate (2). The plurality of partition members (32) partition an internal space (4), surrounded with the first glass substrate (1), the second glass substrate (2), and the frame member (31), into a plurality of spaces (41, 42). Only one member selected from the group consisting of the first glass substrate (1) and the second glass substrate (2) has been cut off along each of multiple lines aligned with the plurality of partition members (32).

This aspect may reduce not only the number of times the assembly (8) needs to be positioned but also the in-process inventory, thus contributing to improving the productivity. In addition, this aspect also allows the assembly (8) to be cut off more accurately along an intended cutting plane, thus contributing to improving the quality as well.

In a glass panel unit (100) assembly (8) according to a tenth aspect, which may be implemented in conjunction with the ninth aspect, only one member selected from the group consisting of the first glass substrate (1) and the second glass substrate (2) has been cut off along virtual cutting planes (900), each passing through a corresponding one of the plurality of partition members (32).

This aspect may reduce not only the number of times the assembly (8) needs to be positioned but also the in-process inventory, thus contributing to improving the productivity. In addition, this aspect also allows the assembly (8) to be cut off more accurately along an intended cutting plane, thus contributing to improving the quality as well.

In a glass panel unit (100) assembly (8) according to an eleventh aspect, which may be implemented in conjunction with the ninth aspect, the plurality of partition members (32) are arranged to face each other with a gap (34) left between the plurality of partition members (32) themselves. Only one member selected from the group consisting of the first glass substrate (1) and the second glass substrate (2) has been cut off along a virtual cutting plane (900) passing through the gap (34).

This aspect may reduce not only the number of times the assembly (8) needs to be positioned but also the in-process inventory, thus contributing to improving the productivity. In addition, this aspect also allows the assembly (8) to be cut off more accurately along an intended cutting plane, thus contributing to improving the quality as well.

### Reference Signs List

- 1: First Glass Substrate
- 2: Second Glass Substrate
- 3: Seal Member
- 4: Internal Space
- 8: Assembly
- 31: Frame Member
- 32: Partition Member
- 34: Gap
- 91: First Incision
- 92: Second Incision
- 100: Glass Panel Unit
- X: Facing Direction
- S1: Arrangement Step
- S2: Bonding Step
- S3: Processing Step
- S4: Cutting Step

## Claims

1. A method for manufacturing a glass panel unit, the method comprising:
an arrangement step including arranging a first glass substrate and a second glass substrate to make the first glass substrate and the second glass substrate face each other with a seal member interposed along multiple lines between the first glass substrate and the second glass substrate;
a bonding step including bonding the first glass substrate and the second glass substrate via the seal member; and
a cutting step including cutting off the first glass substrate and the second glass substrate along an identical line as viewed in a direction in which the first glass substrate and the second glass substrate bonded together face each other and along the seal member,
the cutting step being a step of forming multiple sets of the first and second glass substrates divided by cutting off the first and second glass substrates along multiple lines where the seal member remains along respective sides of cross sections of the first and second glass substrates, and
the cutting step including:
cutting off one member selected from the group consisting of the first glass substrate and the second glass substrate from a surface of the first or glass substrate along at least some of the multiple lines where the first glass substrate and the second glass substrate are to be cut off; and then
cutting off another member selected from the group consisting of the first glass substrate and the second glass substrate from a surface of the first or second glass substrate.

2. The method of claim 1, wherein
the cutting step includes:
cutting off one member selected from the group consisting of the first glass substrate and the second glass substrate from a surface of the first or glass substrate along all of the multiple lines where the first glass substrate and the second glass substrate are to be cut off; and then
cutting off another member selected from the group consisting of the first glass substrate and the second glass substrate from a surface of the first or second glass substrate.

3. The method of claim 2, wherein
the cutting step includes a first cutting step and a second cutting step,
the first cutting step includes:
a first incision forming step including forming a first incision on a surface of the first glass substrate using a cutting blade; and
a first pressing step including applying pressing force along the first incision from the second glass substrate toward the first glass substrate to cut off the first glass substrate, and
the second cutting step includes:
a second incision forming step including forming a second incision on a surface of the second glass substrate using a cutting blade; and
a second pressing step including applying pressing force along the second incision from the first glass substrate toward the second glass substrate to cut off the second glass substrate.

4. The method of claim 2, wherein
the cutting step includes:
a first incision forming step including forming a first incision on a surface of the first glass substrate using a cutting blade;
a first pressing step including applying pressing force along the first incision from the second glass substrate toward the first glass substrate to cut off the first glass substrate;
a second incision forming step including forming a second incision on a surface of the second glass substrate using a cutting blade; and
a second pressing step including applying pressing force along the second incision from the first glass substrate toward the second glass substrate to cut off the second glass substrate, and
the first pressing step and the second pressing step are performed after the first incision forming step and the second incision forming step have been performed.

5. The method of claim 1 or 2, wherein
the seal member includes a plurality of facing portions arranged to face each other with a gap left between the plurality of facing portions, and
the cutting step includes:
cutting off, along a line aligned with the gap, one member selected from the group consisting of the first glass substrate and the second glass substrate from a surface of the first or second glass substrate along at least some of the multiple lines where the first glass substrate and the second glass substrate are to be cut off; and then
cutting off another member selected from the group consisting of the first glass substrate and the second glass substrate from a surface of the first or second glass substrate such that the seal member remains along respective sides of cross sections of the first and second glass substrates divided.

6. The method of claim 5, wherein
the cutting step includes cutting off either the first glass substrate or the second glass substrate from a surface of the first or second glass substrate along all of the multiple lines where the first glass substrate and the second glass substrate are to be cut off and then cutting off either the second glass substrate or the first glass substrate from a surface of the first or second glass substrate.

7. The method of claim 1 or 2, wherein
the seal member includes a frame member formed in a frame shape, and
the bonding step includes creating an internal space surrounded with the frame member between the first and second glass substrates bonded together via the frame member.

8. The method of claim 7, further comprising a processing step including either exhausting air from the internal space or supplying a gas into the internal space.

9. A glass panel unit assembly comprising:
a first glass substrate and a second glass substrate facing each other;
a frame member formed in a frame shape between the first glass substrate and the second glass substrate; and
a plurality of partition members arranged to partition an internal space, surrounded with the first glass substrate, the second glass substrate, and the frame member, into a plurality of spaces,
only one member selected from the group consisting of the first glass substrate and the second glass substrate having been cut off along each of multiple lines aligned with the plurality of partition members.

10. The glass panel unit assembly of claim 9, wherein
only one member selected from the group consisting of the first glass substrate and the second glass substrate has been cut off along virtual cutting planes, each of the virtual cutting planes passing through a corresponding one of the plurality of partition members.

11. The glass panel unit assembly of claim 9, wherein
the plurality of partition members are arranged to face each other with a gap left between the plurality of partition members themselves, and
only one member selected from the group consisting of the first glass substrate and the second glass substrate has been cut off along a virtual cutting plane passing through the gap.
